(19) Europäisches Patentamt / European Patent Office / Office européen des brevets

(11) **EP 2 686 284 B1**

(12) **EUROPÄISCHE PATENTSCHRIFT**

(45) Veröffentlichungstag und Bekanntmachung des Hinweises auf die Patenterteilung:
**14.09.2016   Patentblatt 2016/37**

(21) Anmeldenummer: **12714239.6**

(22) Anmeldetag: **13.03.2012**

(51) Int Cl.:
*C01B 25/38* (2006.01)    *C01B 25/45* (2006.01)
*C04B 111/00* (2006.01)    *C04B 12/02* (2006.01)
*C04B 28/34* (2006.01)    *C04B 111/28* (2006.01)
*C04B 111/82* (2006.01)

(86) Internationale Anmeldenummer:
**PCT/EP2012/054367**

(87) Internationale Veröffentlichungsnummer:
**WO 2012/126771 (27.09.2012 Gazette 2012/39)**

(54) **FLÜSSIGES PHOSPHATHALTIGES BINDEMITTEL**

LIQUID PHOSPHATE-CONTAINING BINDER

LIANT PHOSPHATÉ LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2011   DE 102011005813**

(43) Veröffentlichungstag der Anmeldung:
**22.01.2014   Patentblatt 2014/04**

(73) Patentinhaber: **Chemische Fabrik Budenheim KG**
**55257 Budenheim (DE)**

(72) Erfinder:
• **LEISTER, Michael**
**55218 Ingelheim (DE)**
• **KREBS, Melanie**
**56288 Braunshorn (DE)**
• **SCHMIDT, Erwin**
**55262 Heidesheim (DE)**
• **LIPPOLD, Kirstin**
**55268 Nieder-Olm (DE)**
• **GRAF, Christian**
**55126 Mainz (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**US-A- 3 999 999**

**Beschreibung**

**Gegenstand der Erfindung**

Die Erfindung betrifft ein flüssiges Bindemittel, welches in wässrigem oder einem Gemisch aus wässrigem und organischem Lösungsmittel eine Kombination aus wenigstens zwei und höchstens fünf Metallphosphaten von verschiedenen Metallkationen enthält.

**Hintergrund der Erfindung**

Monoaluminiumphosphat ist neben Phosphorsäure und Wasserglas eines der Standardbindemittel auf anorganischer Basis. Es wird in vielen Bereichen zum Binden unterschiedlichster anorganischer Materialien eingesetzt. Das Einsatzspektrum reicht dabei von feuerfesten Steinen und Massen über mineralische und glasige Fasern, Isolationsmaterialien, Bauplatten bis hin zur Bindung von Farbpigmenten und Funktionsmaterialien auf anorganischen Substraten und Oberflächen.

Die EP 0 100 306 beschreibt die Vorteile des Einsatzes von Monoaluminiumphosphat und Phosphorsäure für Feuerfestanwendungen. Die DE 43 23 778, DE 28 47 807, EP 0 752 396, DE 197 09 405 und EP 0 503 555 beschreiben die Verwendung von Monoaluminiumphosphat in Brandschutz-, Dämm- und Isolierstoffen. In der WO 2001073147 wird der Einsatz als Bindemittel für Abrasionsschutzbeschichtungen beschrieben. Die WO 9726226 beschreibt den Einsatz von Monoaluminiumphosphat als Oxidationsschutzmittel für poröse Körper. Die DE 12 12 504 A beschreibt den Einsatz von Monoaluminiumphosphat als Bindemittel für katalytische Funktionsschichten.

Die zur Polymerisation und Abbindung von Monoaluminiumphosphat benötigten Temperaturen liegen mit 250 bis 350°C oberhalb derjenigen organischer Bindemittel, aber noch deutlich unterhalb des Temperaturbereiches von 500 bis 600°C, bei dem eine irreversible Abbindung von gelösten Silikaten (Wassergläsern) erzielt wird.

Ein Vorteil der phosphatbasierenden Bindemittel ist die erreichbare hohe Bindekraft und Festigkeit der erzeugten Verbunde. Besonders vorteilhaft ist das Festigkeitsverhalten bei Temperaturbeaufschlagung. Bis ca. 1000°C zeigt sich kein Festigkeitsverlust der Produkte, wie er z.B. bei Silikaten durch deren Erweichung bei Temperaturen oberhalb von 500°C auftritt. Bindersysteme auf Monoaluminiumphosphatbasis nach dem Stand der Technik zeigen jedoch auch nach der Temperung oberhalb der Polymerisationstemperatur von 250 bis 350°C bei Wasserbeaufschlagung bzw. Bewitterung (Einwirkung von Feuchtigkeit und elektromagnetischer Strahlung), wie sie in Außenanwendungen auftritt, eine nicht zu vernachlässigende Phosphatabgabe. Diese Abgabe von Phosphaten bietet Algen, Flechten und Moosen gute Wachstumsbedingungen, was jedoch vor allem in der Außenanwendung oft nicht wünschenswert ist. Durch ein Brennen bei höheren Temperaturen kann die Stabilität des Bindemittels erhöht und dadurch die Abgabe von Phosphaten durch Wasserbeaufschlagung bzw. durch Bewitterung reduziert werden. Dies ist jedoch wirtschaftlich von großem Nachteil. Zudem vertragen viele der zu bindenden Materialien keine Temperaturen oberhalb der zur Polymerisation benötigten 250 bis 300°C. Eine Absenkung der zur Polymerisation notwenigen Temperaturen wäre wünschenswert, um einerseits den Prozess wirtschaftlicher zu machen und andererseits das Binden temperaturempfindlicher Stoffe und Materialien zu ermöglichen.

**Aufgabe der Erfindung**

Die Aufgabe der Erfindung bestand in der Bereitstellung eines polymerisierenden Bindemittels zur Bindung von anorganischen Materialien, das eine Polymerisation und Abbindung im gleichen Temperaturbereich erlaubt wie übliche auf Monoaluminiumphosphat basierende Bindemittel bei gleichzeitiger verbesserter Witterungs- und Wasserbeständigkeit der erhaltenen Verbunde.

**Beschreibung der Erfindung**

Die erfindungsgemäße Aufgabe wird gelöst durch ein flüssiges Bindemittel, welches in wässrigem oder einem Gemisch aus wässrigem und organischem Lösungsmittel eine Kombination aus wenigstens zwei und höchstens fünf Metallphosphaten von verschiedenen Metallkationen enthält mit der allgemeinen Formel

$$\sum_{i=1}^{5} X_{i_{m_i}}^{n_i^+}\left(H_{3-\sum_1^5 m_i} PO_4\right)_{\sum_1^5 m_i \cdot n_i} \qquad (I)$$

in der *X*, m und *n* für den jeweiligen Index *i* wie folgt definiert sind:

| *i* | 1 | 2 | 3 | 4 | 5 |
|---|---|---|---|---|---|
| *X* | $Al^{3+}$ | $Zn^{2+}$ | $Mg^{2+}$ | $Ti^{3+}/Ti^{4+}$ | $Fe^{2+}/Fe^{3+}$ |
| m | 0,2 - 1,05 | 0 - 0,5 | 0 - 0,9 | 0 - 0,1 | 0 - 0,15 |
| *n* | 3 | 2 | 2 | 3/4 | 2/3 |

und wobei

$$0,95 \leq \sum_{i=1}^{5} m_i \leq 1,5$$

(II).

Es wurde überraschend gefunden, dass mit einem Bindemittel mit der erfindungsgemäßen Kombinationen von Metallphosphaten eine deutlich erhöhte Beständigkeit des polymerisierten Binders gegenüber Wasserbeaufschlagung und Bestrahlung erzielt wird und die Phosphatabgabe deutlich abgesenkt werden kann.

In dem erfindungsgemäßen Bindemittel beträgt die Absättigung der ersten Protolysestufe der Phosphorsäure zwischen 95 und 150% (Formel II). Der Anteil an freier Phosphorsäure beträgt erfindungsgemäß somit höchstens 5%. Dadurch werden die Reaktivität, Stabilität und Haltbarkeit des flüssigen Bindemittels erhöht.

Da ein Gehalt an freier Säure den pH-Wert stark absenkt und damit die Korrosivität des Binders erhöhen kann, was für die Anwendung in einigen Fällen nachteilig ist, kann es von Vorteil sein, einen Teil oder auch die Gesamtmenge der überschüssigen Säure durch die Zugabe von anorganischen Basen zu neutralisieren. In einer bevorzugten Ausführungsform der Erfindung enthält das flüssige Bindemittel daher weiterhin wenigstens eine anorganische Base, vorzugsweise ausgewählt unter Alkalimetallhydroxiden, -carbonaten, -boraten und -silikaten.

In bestimmten Fällen, insbesondere wenn der pH-Wert des Bindemittels angehoben werden soll, um beispielsweise die Kompatibilität des Bindemittels mit den zu bindenden Komponenten oder anderen Zusätzen zu verbessern, kann es sogar vorteilhaft sein, über den Anteil an freier Phosphorsäure hinaus anorganische Basen der vorgenannten Art hinzuzufügen. Bevorzugt werden die anorganischen Basen bis zum Erreichen des 1. Äquivalenzpunktes bei pH 4,8 hinzugefügt.

In einer Ausführungsform der Erfindung enthält das flüssige Bindemittel eine Kombination aus wenigstens zwei und höchstens vier Metallphosphaten von verschiedenen Metallkationen, vorzugsweise ausgewählt unter $Al^{3+}$, $Zn^{2+}$, $Mg^{2+}$ und $Ti^{3+}/Ti^{4+}$. In einer weiteren Ausführungsform der Erfindung enthält das flüssige Bindemittel eine Kombination aus wenigstens zwei und höchstens drei Metallphosphaten von verschiedenen Metallkationen, vorzugsweise ausgewählt unter $Al^{3+}$, $Zn^{2+}$ und $Mg^{2+}$. Die beiden vorgenannten Ausführungsformen des erfindungsgemäßen flüssigen Bindemittels mit einer Kombination aus höchstens vier bzw. aus höchstens drei Metallphosphaten bieten den Vorteil der besseren Beherrschbarkeit des Bindemittelsystems.

In einer bevorzugten Ausführungsform der Erfindung ist das Lösungsmittel in dem flüssigen Bindemittel Wasser. In einer alternativen Ausführungsform der Erfindung kann das Lösungsmittel neben Wasser bis zu 50 Gew.-% organisches Lösungsmittel, beispielsweise Ethanol, enthalten.

In einer weiteren bevorzugten Ausführungsform der Erfindung weist das flüssige Bindemittel die Kombination von Metallphosphaten in einer Menge von 25 bis 65 Gew.-%, besonders bevorzugt von 28 bis 53 Gew.-%, bezogen auf das Gesamtgewicht des Bindemittels, auf.

Die Erfindung umfasst auch ein Verfahren zur Herstellung des erfindungsgemäßen flüssigen Bindemittels, bei dem man

i) wässrige Phosphorsäure mit einer Konzentration von 70 bis 85 % vorlegt,

ii) die unter Al, Zn, Mg, Ti und/oder Fe ausgewählten Metalle für die wenigstens zwei und höchstens fünf Metallphosphate des Bindemittels in der Form von reaktiven Verbindungen dieser Metalle, ausgewählt unter Oxiden, Hydroxiden, Carbonaten und/oder Silikaten, oder in elementarer Form als Feststoffe oder in Wasser oder organischen Lösungsmittel oder einem Gemisch davon gelöst oder suspendiert gleichzeitig oder aufeinander folgend der Phosphorsäure zugibt, wobei man den Reaktionsansatz gegebenenfalls bis höchstens unterhalb des Siedepunkts erhitzt,

iii) nach Abschluss der Reaktion die Konzentration der Metallphosphate in dem Bindemittel mit Wasser oder einem organischen Lösungsmittel oder einem Gemisch davon auf 25 bis 65 Gew.-%, bezogen auf das Gesamtgewicht des Bindemittels, einstellt.

Vorzugsweise werden die Metallphosphate in der Form der reaktiven Verbindungen der Metalle oder in elementarer Form aufeinander folgend in der Reihenfolge mit zunehmender Reaktivität mit der Phosphorsäure zugegeben. Dabei kann es vorteilhaft sein die vorgelegte Phosphorsäure vor oder nach der ersten Zugabe von Metallverbindung oder Metall bis kurz unterhalb des Siedepunktes zu erhitzen, um die Reaktion zu starten. Anschließend wird der Reaktionspartner mit der nächst höheren Reaktivität zugegeben usw. Auch dabei kann es vorteilhaft sein, die Lösung erneut zu erhitzen, da die Reaktivität der verbleibenden vorgelegten Phosphorsäure im Prozessverlauf absinkt. Es kann auch vorteilhaft sein, bestimmte Ausgangsstoffe vor der Zugabe zu vermischen, um eine optimale Reaktionsführung zu gewährleisten. Insbesondere bei den reaktiveren Ausgangsstoffen, wie Hydroxiden, Silikaten oder den Elementen, kann es vorteilhaft sein, diese vor der Zugabe in Wasser oder einem anderen geeigneten Lösungsmittel wie beispielsweise Ethanol zu lösen bzw. zu dispergieren, um die Reaktion mit der vorgelegten Phosphorsäure kontrolliert ablaufen zu lassen und unerwünschte Nebenrektionen zu vermeiden. Ebenso kann es vorteilhaft sein die einzelnen Reaktionen der Metalle in Form reaktionsfähiger Oxide, Hydroxide, Carbonate, Silikate oder auch in elementarer Form mit der Phosphorsäure zunächst separat voneinander ablaufen zu lassen und die einzelnen Monomerlösungen anschließend zu mischen.

Als Maß für die Reaktivität kann primär die Basizität bzw. der pH-Wert der Lösung herangezogen werden. Jedoch müssen dabei auch die Löslichkeit des jeweils zugegebenen Stoffes in der vorgelegten Phosphorsäure und die Teilchengröße berücksichtigt werden. Allgemein gilt je basischer die wässrige Lösung des Reaktionspartners ist, je besser dessen Löslichkeit in Phosphorsäure ist und je kleiner die Teilchengröße ist, desto reaktiver ist dieser.

Die Konzentration des erfindungsgemäß hergestellten Bindemittels kann nach Beendigung aller Reaktionen oder der Mischung einzelner separater Monomerlösungen durch Zugabe oder Entnahme von Wasser oder einem anderen geeigneten Lösungsmittel, wie beispielsweise Ethanol, eingestellt werden. Diese liegt je nach Zusammensetzung und Anwendungsgebiet im Bereich von 25 bis 65 Gew.-%, vorzugsweise im Bereich von 28 bis 53 Gew.-%, der Kombination von Metallphosphaten bezogen auf das Gesamtgewicht des Bindemittels.

Die zur Bindungsausbildung mit den zu verbindenden Materialien notwendige Bindemittelmenge muss ebenso wie die Auf- bzw. Eintragungsart des erfindungsgemäßen Bindemittels auf jeden einzelnen Anwendungsfall abgestimmt werden. So wird zur Bindung von Materialien mit kleinen und mittleren Teilchengrößen, wie beispielsweise Stäuben, oder von Materialien mit großen spezifischen Oberflächen, wie beispielsweise Perlit oder Schamotte, ein bezogen auf das Gesamtgewicht des Verbundes hoher Bindemittelanteil von etwa 30 bis 90 Gew.-% benötigt. Materialien mit kleinen spezifischen Oberflächen oder Verbunde mit kleinen Kontaktflächen, wie beispielsweise Faserverbunde oder die Pigmentbindung auf Oberflächen, erfordern dagegen einen vergleichsweise geringen Bindemittelanteil von 5 bis 25 Gew.-%, bezogen auf das Gesamtgewicht des Verbundmaterials. Der angegebene Bindemittelanteil bezieht sich auf das gesamte flüssige Bindemittel (Lösungsmittel + Metallphosphate). Um große Oberflächen zu benetzen, muss der Lösungsmittelanteil groß sein. Für kleine Oberflächen reicht ein kleinerer Lösungsmittelanteil aus. Sind die Rohstoffe saugend oder schlecht benetzbar, muss dagegen nicht nur der Lösungsmittelanteil hoch, sondern auch der Binderanteil hoch sein.

In einer ersten Phase nach der Zugabe des erfindungsgemäßen Bindemittels zu den zu verbindenden Materialien findet je nach Art und Reaktivität des zu verbindenden Materials und je nach pH-Wert und verbliebener Reaktivität des Bindemittels zunächst eine Reaktion des Bindemittels mit den zu verbindenden Materialien statt. Diese Reaktion erfolgt analog zu der vom Monoaluminiumphosphat bekannten Reaktion. Ein Teil der verbliebenen reaktiven Wasserstoffionen der Monomerbausteine reagiert mit den zu verbindenden Materialien in einer Säure-Base-Reaktion. Diese Oberflächenreaktionen können die Festigkeit des sich nach der Polymerisation des Bindemittels ausbildenden Verbundes positiv beeinflussen. Ein Ausbleiben von chemischen Oberflächenreaktionen des Bindemittels mit den zu verbindenden Materialien, etwa aufgrund fehlender Reaktivität dieser Materialien, wie beispielsweise resistenter Glasoberflächen, oder geringer Reaktivität des Bindemittels, aufgrund einer geringen Anzahl reaktiver Wasserstoffionen der Monomerbausteine, hat aber im Allgemeinen keinen negativen Einfluss auf die Festigkeit des sich nach der Polymerisation des Bindemittels ausbildenden Verbundes, da die Verbindung der Oberflächen überwiegend adhäsiv und über chemische Reaktionen während des thermisch induzierten Polymerisationsprozesses erfolgt.

In einer zweiten Phase nach der Zugabe des erfindungsgemäßen Bindemittels zu den zu verbindenden Materialien muss das Lösungsmittel entfernt werden. Je nach Zugabemenge des erfindungsgemäßen Bindemittels und der Weglänge für das entweichende Lösungsmittel kann es vorteilhaft sein, diesen Prozess durch Wärmezufuhr bis knapp über den Siedepunkt des Lösemittels zu unterstützen. Hier muss jedoch besonders bei hohen Lösemittelgehalten und voluminösen Verbunden darauf geachtet werden, dass nicht zu große Lösungsmittelmengen zu schnell gasförmig frei gesetzt werden, da das zu einer Schwächung des Verbundes führen kann.

Nach erfolgter Trocknung, die je nach Temperatur, Zugabemenge des erfindungsgemäßen Bindemittels und Weglänge für das entweichende Lösungsmittel von wenigen Minuten bis zu wenigen Tagen dauern kann, weist der Verbund bereits eine Grünfestigkeit auf, die einen Transport, einen Einbau oder eine mechanische Manipulierbarkeit des Verbundes erlaubt.

In einer dritten Phase erfolgt die thermisch induzierte Polymerisation/Kristallisation des erfindungsgemäßen Bindemittels. Diese Phase kann bei geringen Lösungsmittelgehalten und kleinen Weglängen auch mit der zweiten Phase kombiniert werden. Dazu wird der das getrocknete Bindemittel enthaltende Verbund bei Temperaturen von 250 bis 450°C, bevorzugt bei Temperaturen von 280 bis 380°C und besonders bevorzugt bei Temperaturen von 300-350°C getempert. Die Temperzeit muss dabei so bemessen sein, dass an jedem Punkt des zu bindenden Volumens die vorgegebene Polymerisationstemperatur für mindestens 10 min erreicht wird.

Beim Erreichen der Polymerisationstemperatur kommt es unter Wasserabspaltung zu einer Polykondensation und die enthaltenen Monomereinheiten werden irreversibel miteinander zu statistischen Copolymeren mit zufälliger Anordnung der Monomerbausteine verknüpft. Abhängig von der Zusammensetzung des erfindungsgemäßen Bindemittels, der Temperatur und der Haltezeit kann es anschließend im polymerisierten Bindemittel zur Ausbildung von teilkristallinen oder kristallinen Bereichen kommen. Dabei handelt es sich überwiegend um Mischkristalle und mit niedervalenten bzw. höhervalenten Fremdatomen teilsubstituierte Kristalle der jeweiligen Hauptkomponente. Zur Steuerung des Polymerisations- und Kristallisationsprozesses der erfindungsgemäßen monomeren Metallphosphate können auch die optional zugesetzten anorganischen Basen, insbesondere Alkalimetallborate und Alkalimetallsilikate beitragen.

Die Erfindung wird nun anhand von Ausführungsbeispielen weiter erläutert.

Beispiele

Beispiel 1: Bindung von Rotpigment (Eisenoxidrot, Pigment Red 101) auf **Schiefersplitt** (1-3 mm)

|  |  |
|---|---|
| Bindemittelzusammensetzung 1: | |
| Grundzusammensetzung: | $Al_{0,34}Mg_{0,84}Zn_{0,32}(H_{1,5}PO_4)_{3,35}$ |
| Neutralisationszusätze: | keine |
| Lösungsmittel: | 100% Wasser |
| pH-Wert (2%ig): | 2,7 |
| Konzentration: | 50% |

5g rotes Farbpigment (Pigment Red 101) werden in 40g Bindemittel dispergiert. Die Dispersion wird anschließend mit 1000g Schiefersplitt intensiv gemischt. Der so erhaltene Verbund wird bei 100°C für 10 min mit Heißluft getrocknet und anschließend bei 300°C für 30 min getempert.

Die Prüfung des Verbundes erfolgt durch einen Kochtest in entsalztem Wasser. 50g beschichtetes Material werden in 200g Wasser für 45 min gekocht. Das Kochwasser wird abgegossen und filtriert. Das Material wird mit vollentsalztem Wasser gewaschen und dieses ebenfalls filtriert. Der Filterrückstand wird bestimmt und wird als Maß für die Güte der Bindung verwendet.

Als Vergleich wird ein paralleler Versuch mit einer Monoaluminiumphosphatlösung (MALP; 50% Feststoffgehalt, Dichte 1,5 g/cm³, $P_2O_5$-Gehalt 35%, $Al_2O_3$-Gehalt 8,3%, pH-Wert (2%ig) 2,4) durchgeführt. Alle Versuche werden 3-fach wiederholt

|  |  |
|---|---|
| Ergebnis: | |
| Erfindung: | 26 $\pm$ 7 mg Filterrückstand |
| Vergleich: | 47 $\pm$ 12 mg Filterrückstand |

Der Filterrückstand der erfindungsgemäßen Bindemittelzusammensetzung 1 ist somit im Mittel um ca. 45% geringer als der des zum Vergleich untersuchten Standard-MALP-Binders.

**Beispiel 2: Bindung von Schwarzpigment (Eisenoxidschwarz, Pigment Black 11) auf Basaltsplit (8/11)**

|  |  |
|---|---|
| Bindemittelzusammensetzung 2: | |
| Grundzusammensetzung: | $Al_{0,85}Mg_{0,10}Fe_{0,08}(H_2PO_4)_3$ |
| Neutralisationszusätze: | 6% $Na_2O \cdot 2SiO_2$ |
| Lösungsmittel: | 100% Wasser |

(fortgesetzt)

| pH-Wert (2%ig): | 2,8 |
|---|---|
| Konzentration: | 50% |

5 g schwarzes Farbpigment (Pigment Black 11) werden in 40g Bindemittel dispergiert. Die Dispersion wird anschließend mit 1000g Basaltsplitt 8/11 intensiv gemischt. Der so erhaltene Verbund wird bei 100°C für 10 min mit Heißluft getrocknet und anschließend bei 300°C für 30 min getempert.

Die Prüfung des Verbundes erfolgt durch einen Kochtest in entsalztem Wasser. 50g beschichtetes Material werden in 200g Wasser 45 min gekocht. Das Kochwasser wird abgegossen und filtriert. Das Material wird mit vollentsalztem Wasser gewaschen und dieses ebenfalls filtriert. Der Filterrückstand wird bestimmt und wird als Maß für die Güte der Bindung verwendet.

Als Vergleich wird ein paralleler Versuch mit einer Monoaluminiumphosphatlösung (MALP; 50% Feststoffgehalt, Dichte 1,5 g/cm$^3$, $P_2O_5$-Gehalt 35%, $Al_2O_3$-Gehalt 8,3%, pH-Wert (2%ig) 2,4) durchgeführt. Alle Versuche werden 3-fach wiederholt

Ergebnis:

| Erfindung: | $11 \pm 2$ mg Filterrückstand |
|---|---|
| Vergleich: | $15 \pm 2$ mg Filterrückstand |

Der Filterrückstand der erfindungsgemäßen Bindemittelzusammensetzung 2 ist somit im Mittel um ca. 26% geringer als der des zum Vergleich untersuchten Standard-MALP-Binders. Zudem zeigte der mit der Standard MALP hergestellte Verbund eine deutliche Farbveränderung ins blauviolette nach dem Temperprozess.

**Beispiel 3: Bindung von Vermiculitgranulat (0-3 mm)**

Bindemittelzusammensetzung 3:

| Grundzusammensetzung: | $Al_{0,33}Mg_{0,51}Zn_{0,11}(H_2PO_4)_{2,23}$ |
|---|---|
| Neutralisationszusätze: | 5% $Na_2O \cdot 2SiO_2$ |
| Lösungsmittel: | 50% Wasser / 50% Ethanol |
| pH-Wert (2%ig): | 2,8 |
| Konzentration: | 40% |

500 g Vermiculitgranulat (0-3 mm) werden mit 500 g Bindemittel intensiv vermischt. Die Mischung wird anschließend zu zylindrischen Probekörpern verpresst. Die Probekörper werden bei 100°C für 1h mit Heißluft getrocknet und anschließend bei weitere 2h bei 300°C getempert.

Die Prüfung des Verbundes erfolgt durch einen Kochtest in entsalztem Wasser. Die Probekörper werden in einem Wasserbad 60 min gekocht. Anschließend werden die Probekörper bei 200°C für 2h getrocknet. Als Maß für die Güte der Bindung wird der Masseverlust der Probekörper gemessen.

Als Vergleich wird ein paralleler Versuch mit einer Monoaluminiumphosphatlösung (MALP; 50% Feststoffgehalt, Dichte 1,5 g/cm$^3$, $P_2O_5$-Gehalt 35%, $Al_2O_3$-Gehalt 8,3%, pH-Wert (2%ig) 2,4) durchgeführt. Alle Versuche werden 3-fach wiederholt

Ergebnis:

| Erfindung: | $1,8 \pm 0,3$ % Masseverlust des Probekörpers |
|---|---|
| Vergleich: | $2,4 \pm 0,3$ % Masseverlust des Probekörpers |

Der Masseverlust und damit die Löslichkeit des Probekörpers mit der erfindungsgemäßen Bindemittelzusammensetzung 3 ist somit um ca. 25% geringer als der des zum Vergleich untersuchten Probekörpers mit Standard MALP-Binder.

**Beispiel 4: Bindung von SIC-Pulver (0-0,8 mm)**

<table>
<tr><td colspan="2" align="center"><u>Bindemittelzusammensetzung 4:</u></td></tr>
<tr><td>Grundzusammensetzung:</td><td>$Al_{0,92}Ti_{0,12}(H_{1,96}PO_4)_{3,24}$</td></tr>
<tr><td>Neutralisationszusätze:</td><td>5% $Na_2O \cdot 2SiO_2$ + 6% $Na_2B_4O_7$</td></tr>
<tr><td>Lösungsmittel:</td><td>100% Wasser</td></tr>
<tr><td>pH-Wert (2%ig):</td><td>3,0</td></tr>
<tr><td>Konzentration:</td><td>40%</td></tr>
</table>

900g SiC-Pulver (0-0,8 mm) werden mit 180g Bindemittel intensiv vermischt. Die Mischung wird anschließend zu zylindrischen Probekörpern verpresst. Die Probekörper werden bei 100°C für 2h mit Heißluft getrocknet und anschließend bei weitere 2h bei 300°C getempert.

Die Prüfung des Verbundes erfolgt durch einen Kochtest in entsalztem Wasser. Die Probekörper wurden in einem Wasserbad 60 min gekocht. Anschließend werden die Probekörper bei 200°C für 2h getrocknet. Als Maß für die Güte der Bindung wird der Masseverlust der Probekörper verwendet.

Als Vergleich wird ein paralleler Versuch mit einer Monoaluminiumphosphatlösung (MALP; 50% Feststoffgehalt, Dichte 1,5 g/cm$^3$, $P_2O_5$-Gehalt 35%, $Al_2O_3$-Gehalt 8,3%, pH-Wert (2%ig) 2,4) durchgeführt. Alle Versuche werden 3-fach wiederholt

<table>
<tr><td colspan="2" align="center"><u>Ergebnis:</u></td></tr>
<tr><td>Erfindung:</td><td>0,5 % Masseverlust des Probekörpers</td></tr>
<tr><td>Vergleich:</td><td>12 % Masseverlust des Probekörpers</td></tr>
</table>

Der Masseverlust und damit die Löslichkeit des Probekörpers mit der erfindungsgemäßen Bindemittelzusammensetzung 4 ist somit ca. 24 mal geringer als der des zum Vergleich untersuchten Probekörpers mit Standard MALP-Binder.

**Beispiel 5: Vergleich der von verschiedenen Bindemitteln verursachten Korrosionsraten**

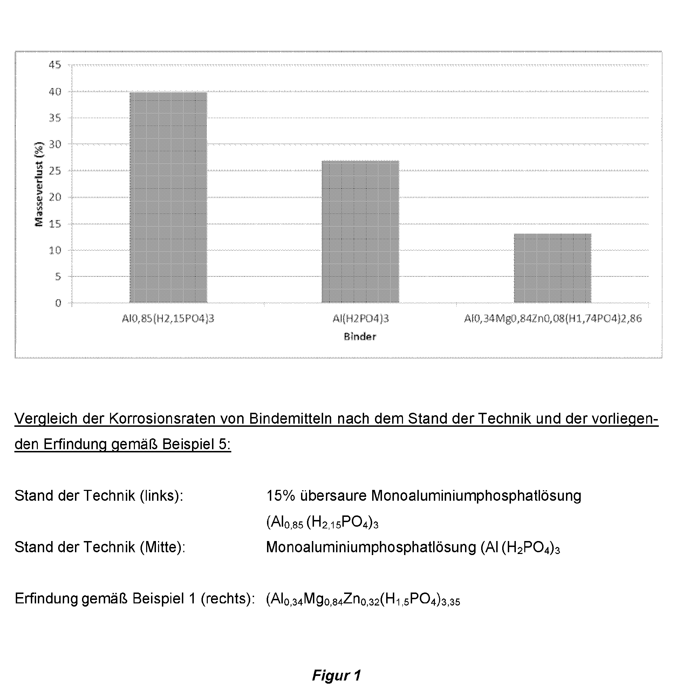

In einem Vergleichsversuch wurden zwei Standard-Bindemittel, 15% übersaure Monoaluminiumphosphatlösung ($Al_{0,85}(H_{2,15}PO_4)_3$; 48 Gew.-% Feststoffgehalt, Dichte 1,51 g/cm$^3$, $P_2O_5$-Gehalt 38%, $Al_2O_3$-Gehalt 7,8 %, pH-Wert (2%ig) 1,8) und Monoaluminiumphosphatlösung ($Al (H_2PO_4)_3$; 50 Gew.-% Feststoffgehalt, Dichte 1,51 g/cm$^3$, $P_2O_5$-Gehalt 35 %, $Al_2O_3$-Gehalt 8,3%, pH-Wert (2%ig) 2,4) und die erfindungsgemäße Bindemittelzusammensetzung 1 gemäß Beispiel 1 ($Al_{0,34}Mg_{0,84}Zn_{0,32}(H_{1,5}PO_4)_{3,35}$; Neutralisationszusätze: keine, Lösungsmittel: 100% Wasser, pH-Wert (2%ig): 2,7, Konzentration: 50%) auf Stahlblech aufgetragen und die verursachten Korrosionsraten durch die Messung des Masseverlustes des Stahlblechs nach einer Kontaktzeit von 48h gemessen. Die verursachten Korrosionsraten wurden nach der Entnahme der Probekörper durch den ermittelten Masseverlust bestimmt. Die Ergebnisse sind in Figur 1 wiedergegeben.

**Patentansprüche**

1. Flüssiges Bindemittel, welches in wässrigem oder einem Gemisch aus wässrigem und organischem Lösungsmittel eine Kombination aus wenigstens zwei und höchstens fünf Metallphosphaten von verschiedenen Metallkationen enthält mit der allgemeinen Formel

$$\sum_{i=1}^{5} X_{i_{m_i}}^{n_i^+} (H_{3-\sum_1^5 m_i} PO_4)_{\sum_1^5 m_i \cdot n_i} \qquad (I)$$

in der *X, m und* n für den jeweiligen Index *i* wie folgt definiert sind:

| $i$ | 1 | 2 | 3 | 4 | 5 |
|---|---|---|---|---|---|
| $X$ | $Al^{3+}$ | $Zn^{2+}$ | $Mg^{2+}$ | $Ti^{3+}/Ti^{4+}$ | $Fe^{2+}/Fe^{3+}$ |
| m | 0,2 - 1,05 | 0 - 0,5 | 0 - 0,9 | 0 - 0,1 | 0 - 0,15 |
| $n$ | 3 | 2 | 2 | 3/4 | 2/3 |

wobei

$$0,95 \leq \sum_{i=1}^{5} m_i \leq 1,5 \qquad \text{(II)}$$

und wobei das flüssige Bindemittel weiterhin wenigstens eine anorganische Base enthält, die unter Alkalimetallhydroxiden, -carbonaten, -boraten und -silikaten ausgewählt ist.

2. Flüssiges Bindemittel nach Anspruch 1, **dadurch gekennzeichnet, dass** es eine Kombination aus wenigstens zwei und höchstens vier Metallphosphaten von verschiedenen Metallkationen, vorzugsweise ausgewählt unter $Al^{3+}$, $Zn^{2+}$, $Mg^{2+}$ und $Ti^{3+}$ / $Ti^{4+}$, enthält.

3. Flüssiges Bindemittel nach Anspruch 1, **dadurch gekennzeichnet, dass** es eine Kombination aus wenigstens zwei und höchstens drei Metallphosphaten von verschiedenen Metallkationen, vorzugsweise ausgewählt unter $Al^{3+}$, $Zn^{2+}$ und $Mg^{2+}$ enthält,

4. Flüssiges Bindemittel nach einem der vorangehenden Ansprüche, **dadurch gekennzeichnet, dass** das Lösungsmittel Wasser mit 0 bis 50 Gew.-% organischem Lösungsmittel, vorzugsweise Ethanol, gemischt ist.

5. Flüssiges Bindemittel nach einem der vorangehenden Ansprüche, **dadurch gekennzeichnet, dass** es die Kombination von Metallphosphaten in einer Menge von 25 bis 65 Gew.-%, vorzugsweise von 28 bis 53 Gew.-%, bezogen auf das Gesamtgewicht des Bindemittels, aufweist.

6. Flüssiges Bindemittel nach einem der vorangehenden Ansprüche, **dadurch gekennzeichnet, dass** es einen Anteil an freier Phosphorsäure ($H_3PO_4$) von höchstens 5 Mol-% enthält.

7. Verfahren zur Herstellung eines flüssigen Bindemittels gemäß einem der vorangehenden Ansprüche, bei dem man

i) wässrige Phosphorsäure mit einer Konzentration von 70 bis 85 % vorlegt,
ii) die unter Al, Zn, Mg, Ti und/oder Fe ausgewählten Metalle für die wenigstens zwei und höchstens fünf Metallphosphate des Bindemittels in der Form von reaktiven Verbindungen dieser Metalle, ausgewählt unter Oxiden, Hydroxiden, Carbonaten und/oder Silikaten, oder in elementarer Form als Feststoffe oder in Wasser oder organischen Lösungsmittel oder einem Gemisch davon gelöst oder suspendiert gleichzeitig oder aufeinander folgend der Phosphorsäure zugibt und dem flüssigen Bindemittel weiterhin wenigstens eine anorganische Base zugibt, die unter Alkalimetallhydroxiden, -carbonaten, -boraten und -silikaten ausgewählt ist, wobei man den Reaktionsansatz gegebenenfalls bis höchstens unterhalb des Siedepunkts erhitzt,
iii) nach Abschluss der Reaktion die Konzentration der Metallphosphate in dem Bindemittel mit Wasser oder einem organischen Lösungsmittel oder einem Gemisch davon auf 25 bis 65 Gew.-%, bezogen auf das Gesamtgewicht des Bindemittels, einstellt.

**Claims**

1. A liquid binder which in an aqueous solvent or a mixture of aqueous and organic solvent contains a combination of at least two and at most five metal phosphates of different metal cations, having the general formula:

$$\sum_{i=1}^{5} X_{i_{m_i}}^{n_i^+} (H_{3-\sum_{1}^{5} m_i} PO_4)_{\sum_{1}^{5} m_i \cdot n_i} \tag{I}$$

in which *X, m and n* for the respective index *i* are defined as follows:

| *i* | 1 | 2 | 3 | 4 | 5 |
|-----|---|---|---|---|---|
| *X* | $Al^{3+}$ | $Zn^{2+}$ | $Mg^{2+}$ | $Ti^{3+}/Ti^{4+}$ | $Fe^{2+}/Fe^{3+}$ |
| *m* | 0.2 - 1.05 | 0 - 0.5 | 0 - 0.9 | 0-0.1 | 0 - 0.15 |
| *n* | 3 | 2 | 2 | 3/4 | 2/3 |

wherein

$$0.95 \le \sum_{i=1}^{5} m_i \le 1.5 \tag{II}$$

and wherein the liquid binder further contains at least one inorganic base selected from alkali metal hydroxides, carbonates, borates and silicates.

2. A liquid binder according to claim 1 **characterised in that** it contains a combination of at least two and at most four metal phosphates of different metal cations, preferably selected from $Al^{3+}$, $Zn^{2+}$, $Mg^{2+}$ and $Ti^{3+}/Ti^{4+}$.

3. A liquid binder according to claim 1 **characterised in that** it contains a combination of at least two and at most three metal phosphates of different metal cations, preferably selected from $Al^{3+}$, $Zn^{2+}$ and $Mg^{2+}$.

4. A liquid binder according to one of the preceding claims **characterised in that** the solvent water is mixed with 0 to 50 wt.% of organic solvent, preferably ethanol.

5. A liquid binder according to one of the preceding claims **characterised in that** it has a combination of metal phosphates in an amount of 25 to 65 wt.%, preferably 28 to 53 wt.%, with respect to the total weight of the binder.

6. A liquid binder according to one of the preceding claims **characterised in that** it contains a proportion of free phosphoric acid ($H_3PO_4$) of at most 5 mol.%.

7. A process for the production of a liquid binder according to one of the preceding claims in which:

   i) there is provided aqueous phosphoric acid in a concentration of 70 to 85%,
   ii) the metals selected from Al, Zn, Mg, Ti and/or Fe for the at least two and at most five metal phosphates of the binder in the form of reactive compounds of those metals selected from oxides, hydroxides, carbonates and/or silicates or in elementary form as solids or suspended or dissolved in water or organic solvent or a mixture thereof are simultaneously or successively added to the phosphoric acid and at least one inorganic base selected from alkali metal hydroxides, carbonates, borates and silicates is further added to the liquid binder, wherein the reaction batch is optionally heated to at highest below the melting point, and
   iii) after the conclusion of the reaction the concentration of the metal phosphates in the binder is adjusted with water or an organic solvent or a mixture thereof to 25 to 65 wt.% with respect to the total weight of the binder.

**Revendications**

1. Liant liquide, qui contient, dans un solvant aqueux ou dans un mélange constitué d'un solvant aqueux et d'un solvant organique, une combinaison d'au moins deux et d'au plus cinq phosphates métalliques de différents cations métalliques, de formule générale

$$\sum_{i=1}^{5} X_{i_{m_i}}^{n_i^+} (H_{3-\sum_1^5 m_i} PO_4)_{\sum_1^5 m_i \cdot n_i} \qquad \text{(I)}$$

dans laquelle *X, m* et *n*, pour chaque indice *i*, sont définis comme suit :

| *i* | 1 | 2 | 3 | 4 | 5 |
|---|---|---|---|---|---|
| *X* | $Al^{3+}$ | $Zn^{2+}$ | $Mg^{2+}$ | $Ti^{3+}/Ti^{4+}$ | $Fe^{2+}/Fe^{3+}$ |
| m | 0,2 - 1,05 | 0 - 0,5 | 0 - 0,9 | 0 - 0,1 | 0-0,15 |
| *n* | 3 | 2 | 2 | 3/4 | 2/3 |

où

$$0,95 \leq \sum_{i=1}^{5} m_i \leq 1,5 \qquad \text{(II)}$$

et le liant liquide contenant en outre au moins une base inorganique, qui est choisie parmi les hydroxydes, les carbonates, les borates et les silicates de métaux alcalins.

2. Liant liquide selon la revendication 1, **caractérisé en ce qu'**il contient une combinaison d'au moins deux et d'au plus quatre phosphates métalliques de différents cations métalliques, de préférence choisis parmi $Al^{3+}$, $Zn^{2+}$, $Mg^{2+}$ et $Ti^{3+}/Ti^{4+}$.

3. Liant liquide selon la revendication 1, **caractérisé en ce qu'**il contient une combinaison d'au moins deux et d'au plus trois phosphates métalliques de différents cations métalliques, choisis de préférence parmi $Al^{3+}$, $Zn^{2+}$ et $Mg^{2+}$.

4. Liant liquide selon l'une des revendications précédentes, **caractérisé en ce que** le solvant est de l'eau, mélangée à 0 à 50 % en poids d'un solvant organique, de préférence de l'éthanol.

5. Liant liquide selon l'une des revendications précédentes, **caractérisé en ce qu'**il comprend la combinaison de phosphates métalliques en une quantité de 25 à 65 % en poids, de préférence de 28 à 53 % en poids, par rapport au poids total du liant.

6. Liant liquide selon l'une des revendications précédentes, **caractérisé en ce qu'**il contient une proportion d'acide phosphorique libre ($H_3PO_4$) d'au plus 5 % en moles.

7. Procédé de préparation d'un liant liquide selon l'une des revendications précédentes, dans lequel :

   i) on met en place un acide phosphorique aqueux à une concentration de 70 à 85 %,
   ii) on ajoute à l'acide phosphorique les métaux choisis parmi Al, Zn, Mg, Ti et/ou Fe pour les au moins deux et les au plus cinq phosphates métalliques du liant, sous forme de composés réactifs de ces métaux, choisis parmi les oxydes, les hydroxydes, les carbonates et/ou les silicates, ou sous forme élémentaire en tant que matières solides, ou dissous ou mis en suspension dans de l'eau ou dans des solvants organiques ou dans un mélange de ceux-ci, et ce, simultanément ou successivement, et on ajoute en outre au liant liquide au moins une base inorganique, qui est choisie parmi les hydroxydes, les carbonates, les borates et les silicates de métaux alcalins, la masse réactionnelle étant éventuellement chauffée jusqu'à au plus une température inférieure au point d'ébullition,
   iii) après la fin de la réaction, on ajuste la concentration des phosphates métalliques dans le liant avec de l'eau ou avec un solvant organique ou avec un mélange de ceux-ci, à 25 à 65 % en poids par rapport au poids total du liant.

45

40

35

30

Masseverlust (%)

25

20

15

10

5

0

AI0,85(H2,15PO4)3          AI(H2PO4)3          AI0,34Mg0,84Zn0,08(H1,74PO4)2,86

Binder

Vergleich der Korrosionsraten von Bindemitteln nach dem Stand der Technik und der vorliegenden Erfindung gemäß Beispiel 5:

Stand der Technik (links):         15% übersaure Monoaluminiumphosphatlösung
                                    $(Al_{0,85} (H_{2,15}PO_4)_3$
Stand der Technik (Mitte):        Monoaluminiumphosphatlösung $(Al (H_2PO_4)_3$

Erfindung gemäß Beispiel 1 (rechts):  $(Al_{0,34}Mg_{0,84}Zn_{0,32}(H_{1,5}PO_4)_{3,35}$

*Figur 1*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0100306 A
- DE 4323778
- DE 2847807
- EP 0752396 A
- DE 19709405
- EP 0503555 A
- WO 2001073147 A
- WO 9726226 A
- DE 1212504 A